# EUROPÄISCHE PATENTSCHRIFT

(11) **EP 0 557 750 B1**
(45) Veröffentlichungstag und Bekanntmachung des Hinweises auf die Patenterteilung: **10.04.1996**
(21) Anmeldenummer: 93101693.5
(22) Anmeldetag: 04.02.1993
(51) Int. Cl.: E03D 11/13, F16L 47/00, E03C 1/122

(54) **Ablaufarmatur einer wandhängenden Toilette**
Outlet for a wall-mounted toilet
Dispositif d'écoulement pour toilettes suspendues au mur

(30) Priorität: 27.02.1992 DE 9202538 U; 30.04.1992 DE 9205827 U; 10.10.1992 DE 4234189
(43) Veröffentlichungstag der Anmeldung: 01.09.1993
(73) Patentinhaber: Dallmer GmbH & Co., 59757 Arnsberg (DE)
(72) Erfinder: Dallmer, Johannes, Dipl.Ing., D-59757 Arnsberg (DE)
(74) Vertreter: Fritz, Edmund Lothar, Dipl.-Chem.

(56) Entgegenhaltungen:
- EP-A- 0 480 296
- AU-B- 442 238
- DE-U- 9 205 827
- GB-A- 890 225

## Beschreibung

Die Erfindung bezieht sich auf eine Ablaufarmatur einer wandhängenden Toilette mit den Merkmalen nach dem Oberbegriff des Hauptanspruchs.

Wandhängende Toiletten werden an in der Wand aufgestellten Rahmen angebracht. Vor dem Rahmen ist die Wand mit Fliesen bekleidet, dahinter befindet sich die Ablaufarmatur bestehend aus einem horizontalen Rohrabschnitt, der an das häusliche Abwassernetz angeschlossen ist, einem spitzwinklig von dem horizontalen Rohrabschnitt abzweigenden Rohrabschnitt und einem mit einem Schenkel in diesen Rohrabschnitt eingesteckten Krümmer, dessen anderer Schenkel horizontal quer eingestellt ist und zur Aufnahme des Ablaufstutzens der Toilette dient. Aus montagetechnischen Gründen kann der in den abgezweigten Rohrabschnitt eingesteckte und abgedichtete Schenkel ein Stück ausgezogen werden. Weiter besteht die Möglichkeit, den horizontal quer vorstehenden Schenkel des Krümmers um 180° umgeschwenkt einzustellen, wenn der horizontale Rohrabschnitt in die andere Fließrichtung montiert werden soll.

Bei einer bekannten Ablaufarmatur einer wandhängenden Toilette der beschriebenen Art (DE-GM 92 05 827, Fig. 3) ist der horizontale Rohrabschnitt über den abgezweigten Rohrabschnitt hinaus verlängert, jedoch nur in Gestalt einer Muffe mit kleinerem Querschnitt, geeignet für den Anschluß eines Bidet. Der abzweigende Stutzen und der eingesteckte Schenkel des Krümmers sind gerade abgeschnitten, dabei bestimmt sich die Länge des abgezweigten Stutzens und somit auch die gesamte Montagehöhe der Armatur durch den Auszugsweg des eingesteckten Schenkels.

Der Erfindung liegt die Aufgabe zugrunde, eine Armatur der vorbeschriebenen Art so auszubilden, daß der horizontale Rohrabschnitt mit gleichem Querschnitt über den abgezweigten Rohrabschnitt hinaus verlängert werden kann und dies bei einer minimalen Gesamthöhe der Armatur.

Diese Aufgabe wird durch eine Ablaufarmatur mit den Merkmalen nach dem Anspruch 1 gelöst. Der Unteranspruch hat eine bevorzugte Ausführungsform dieser Lösung zum Inhalt.

Bei einer solchen Armatur ist der horizontale Rohrabschnitt über den abzweigenden Rohrabschnitt hinaus in Gestalt einer Muffe verlängert, deren Durchmesser so groß ist, daß dort eine Abwasserleitung angeschlossen werden kann, die den gleichen Querschnitt hat wie der Teil des horizontalen Rohrabschnitts, der das Wasser von der Toilette aufnimmt. Trotz dieser Querschnittsvergrößerung ist die gesamte Bauhöhe der Armatur, d.h. der Abstand der Achse des querstehenden Schenkels des Krümmers vom Boden des horizontalen Rohrabschnitts, so minimal wie möglich. Dies ist darauf zurückzuführen, daß die Endkanten des abzweigenden Rohrabschnitts nicht gerade geschnitten sind, sondern an beiden Seiten in Gestalt eines konkaven Bogens, der bei der größtmöglichen Einsteckung auf der einen oder auf der anderen Seite den horizontalen Schenkel des 90°-Krümmers aufnehmen kann, so daß dieser eine bei weitem niedrigere Position hat als bei einem geraden Zuschnitt. Die beiden konvexen Bögen des abzweigenden Rohrabschnitts gehen jeweils in zwei konkave Bögen über. Dementsprechend gestaltet ist auch das Ende des eingesteckten Schenkels des 90°-Krümmers, denn auch er verläuft in zwei konkaven Bögen und zwei konvexen Bögen mit einem dazu parallelen von einer Nut aufgenommenen Dichtungsstreifen. Durch diese Gestaltung ergibt sich auch bei der niedrigsten Einstellung des 90°-Krümmers keine Behinderung des Durchflußquerschnittes, denn der innen konkave Bogenabschnitt des eingesteckten Schenkels des Krümmers liegt immer noch höher als der Scheitel des horizontalen Rohrabschnitts.

Auch bei einer Armatur nach der Erfindung besteht die Möglichkeit, den 90°-Krümmer ein Stück herauszuziehen und somit den horizontalen Schenkel höher einzustellen, wobei vorzugsweise der Auszugsweg begrenzt ist durch Anschlag eines angeformten Hakens an einem Wulst.

Im folgenden wird ein Ausführungsbeispiel der Erfindung beschrieben unter Bezugnahme auf die beiliegenden Zeichnungen.
- Fig. 1: ist eine Draufsicht auf eine Ablaufarmatur einer wandhängenden Toilette nach der Erfindung;
- Fig. 2: ist eine Ansicht in Richtung des Pfeiles II von Fig. 1;
- Fig. 3: ist eine Ansicht in Richtung des Pfeiles III von Fig. 2;
- Fig. 4: zeigt die Armatur nach Fig. 2 in einem Längsschnitt, jedoch den dazugehörigen Krümmer als Einzelteil;
- Fig. 5: ist ein Schnitt durch den Krümmer nach V-V von Fig. 4.

Bei dieser Armatur für eine wandhängende Toilette ist ein horizontaler Rohrabschnitt 10 vorzugsweise aus Kunststoff vorgesehen, mit einem angeformten spitzwinklig abzweigenden Rohrabschnitt 12. Der horizontale Rohrabschnitt 10 setzt sich über den Rohrabschnitt 12 hinaus in Gestalt einer Muffe 11 fort zur Aufnahme eines Abwasserrohres mit im wesentlichen gleichem Durchmesser.

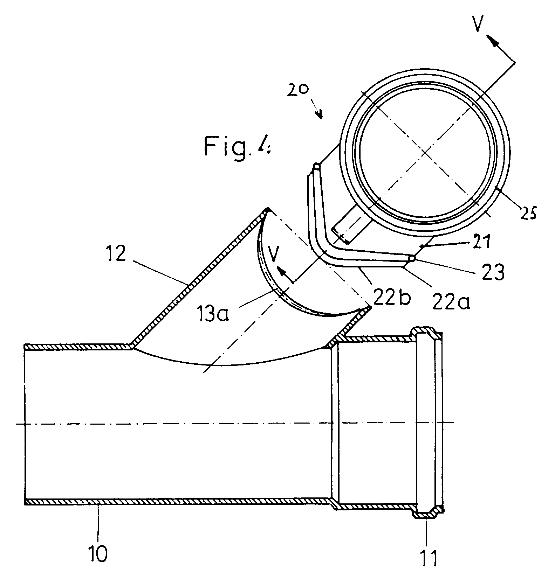

In den abgezweigten Rohrabschnitt 12 ist ein 90°-Krümmer 20 mit seinem Schenkel 21 ein Stück axial verschiebbar eingesteckt. Der andere Schenkel 25 des Krümmers ist so eingesteckt, daß er rechtwinklig im Grundriß quer vorsteht, wie Fig. 1 zeigt. Dieser Schenkel ist zur Aufnahme des Abwassers aus der nicht dargestellten Toilette vorgesehen, wobei er zur Aufnahme eines Ablaufstutzens 3 der Toilette geeignet ist. Die nicht dargestellte Toilette selbst hängt in einem stehenden Rahmen 1, daran ist auch der horizontale Schenkel 25 gehalten. Durch Fliesen 2 ist die gesamte Ablaufarmatur abgedeckt.

Das Abwasser von der Toilette wird durch den Schenkel 25 aufgenommen, fließt weiter über den Rohrabschnitt 12 in Richtung des Pfeiles in den horizontalen Rohrabschnitt 10 und weiter über die häusliche Abwasserleitung. Weiteres Abwasser kann im Rohrabschnitt 10 über eine an die Muffe 11 angeschlossene Leitung aufgenommen werden.

Damit die Armaturen auch umgekehrt also in umgekehrter Fließrichtung angeschlossen werden kann, besteht die Möglichkeit den 90°-Krümmer im Grundriß so zu drehen, daß der freie horizontale Schenkel 25 an der gegenüberliegenden Seite vorsteht, wie es auf Fig. 1 bei 25a gestrichelt dargestellt ist.

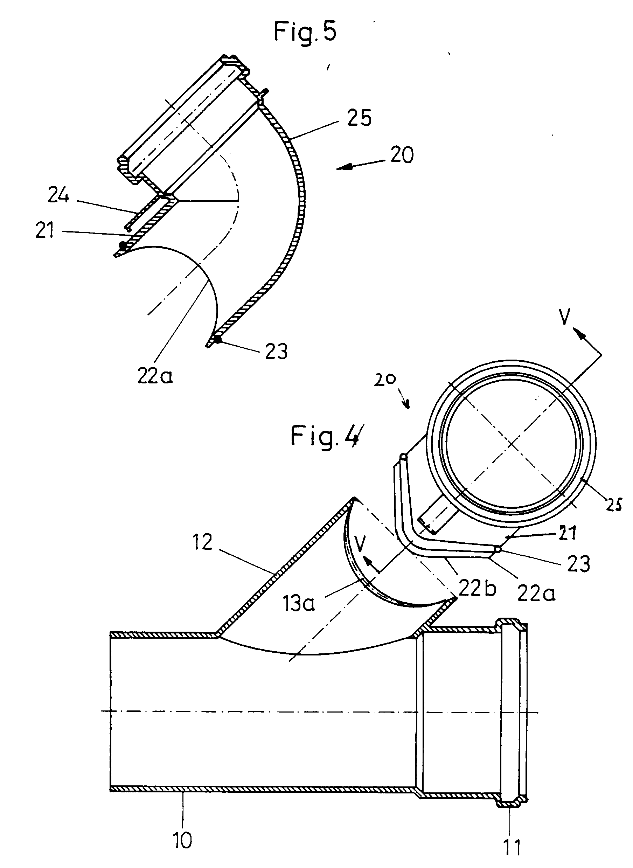

Im übrigen besteht die Möglichkeit, zur Anpassung an die örtlichen Verhältnisse, den 90°-Krümmer, der auf Fig. 1 bis 3 in der niedrigsten Stellung gezeigt ist, ein Stück bis zu einem Anschlag aus dem Rohrabschnitt 12 herauszuziehen, wie auf Fig. 3 gestrichelt dargestellt.

Die Begrenzung des Rohrabschnitts 12 erfolgt, wie aus Fig. 4 hervorgeht, an jeder Seite durch einen konkaven Bogen 13a, der jeweils in einen konvexen Bogen 13b (Fig. 3) übergeht. Diesen Bogenstücken entsprechen am eingesteckten Schenkel 21 des Krümmers ein konkaver Bogen 22a (Fig. 5) und ein konvexer Bogen 22b (Fig. 4). Wenn also der Schenkel 21 eingesteckt ist, dann verlaufen die konvexen bzw. konkaven Bögen des Schenkels einerseits und des Rohrabschnitts andererseits parallel. Die Abdichtung erfolgt durch einen Dichtungsstreifen 23 in einer Nut des eingesteckten Schenkels, parallel zu den Bögen 22a und 22b angeordnet.

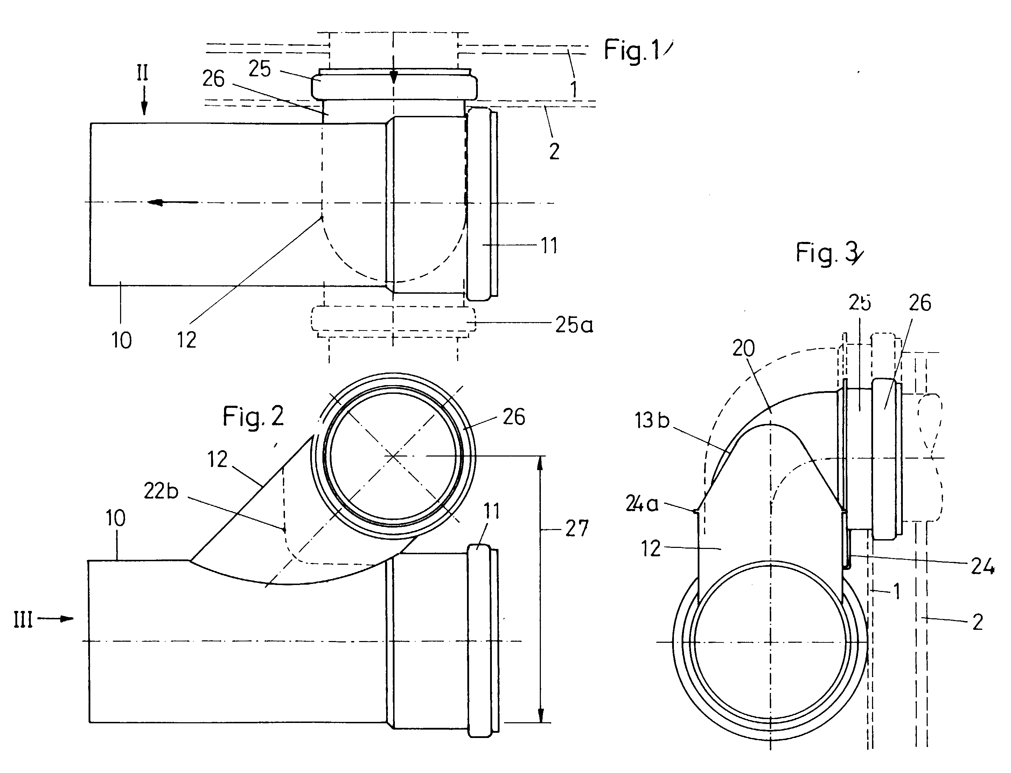

Wenn der Krümmer 90, wie auf Fig. 1 bis 3 dargestellt, soweit wie möglich eingesteckt ist, dann wird der horizontale Schenkel 25 des Krümmers von einem der konkaven Bögen 13a des Rohrabschnitts 12 aufgenommen. Dabei befindet sich der konvexe Bogen 22b (gestrichelt auf Fig. 2) noch oberhalb des Querschnitts des horizontalen Rohres 10, so daß dessen Aufnahme nicht eingeschränkt ist. Der 90°-Krümmer läßt sich indessen ein Stück ausziehen, wie auf Fig. 3 gestrichelt dargestellt, ohne daß dadurch die Abdichtung beeinträchtigt wird. Der Auszugsweg ist begrenzt durch den Anschlag eines angeformten Hakens 24 an einem Wulst 24a.

Die mimimale Bauhöhe, d.h. der Höhenabstand der Achse des Schenkels 25 bis zum Boden des Rohrabschnitts 10 ist auf Fig. 2 mit 27 bezeichnet.

## Patentansprüche

1. Ablaufarmatur einer wandhängenden Toilette mit den Merkmalen:
- sie besteht aus einem horizontal montierbaren Rohrabschnitt (10) mit einem nach oben spitzwinklig abzweigenden Rohrabschnitt (12) wobei der horizontale Rohrabschnitt (10) über den abgezweigten Rohrabschnitt (12) in Gestalt einer Muffe (11) verlängert ist;
- es ist ein 90°-Krümmer (20) vorgesehen, der mit einem Schenkel (21) abgedichtet und ein Stück ausziehbar in den abzweigenden Rohrabschnitt (12) eingesteckt ist und dessen anderer Schenkel (25) zwecks Aufnahme eines Ablaufstutzens (3) der Toilette horizontal quer nach der einen oder anderen Seite einstellbar ist;
gekennzeichnet durch die nachfolgend genannten weiteren Merkmale:
- der abgezweigte Rohrabschnitt (12) ist an jeder Seite durch einen konkaven Bogen (13a) begrenzt, die in Gestalt von konvexen Bögen (13b) ineinanderübergehen, wobei jeweils einer der konkaven Bögen bei vollständig eingestecktem 90°-Krümmer (20) den unteren Bereich des horizontalen Schenkels (25) aufnimmt;
- der eingesteckte Schenkel (21) des Krümmers (20) ist der Begrenzung des abgezweigten Rohrabschnitts entsprechend durch zwei konkave Bögen (22a) und zwei konvexe Bögen (22b) begrenzt, wobei in einer Nut ein parallel zu diesen Bögen verlaufender Dichtungsstreifen (23) aufgenommen ist.

2. Ablaufarmatur nach Anspruch 1, dadurch gekennzeichnet, daß der 90°-Krümmer (20) bis zum Anschlag eines angeformten Hakens (24) an einem Wulst (24a) ausziehbar ist.

3. Ablaufarmatur nach Anspruch 1, dadurch gekennzeichnet, daß die über den abgezweigen Rohrabschnitt (12) hinausgehende Muffe (11) zur Aufnahme eines Abwasserrohres bemessen ist, mit dem gleichen Querschnitt wie der weiterführende horizontale Rohrabschnitt (10).

## Claims

1. Outlet for a wall-mounted toilet having the following characteristics:
- it consists of a horizontally mountable pipe section (10) with a pipe section (12) branching off upwardly at an acute angle, the horizontal pipe section (10) being extended beyond the branching off pipe section (12) in the form of a socke (11);
- a 90° bend (20) is provided which is inserted in the branching off pipe section (12) in such a manner that one leg (21) is sealed and slightly extensible, the other leg (25) being transversely adjustable in the horizontal direction towards the one or the other side for the purpose of receiving an outlet socket (3) of the toilet;
characterised by the following further features:
- the branching off pipe section (12) is limited at each side by a concave curvature (13a) which curvatures pass into one another in the shape of convex curvatures (13b), in each case one of the concave curvatures accommodating the lower region of the horizontal leg (25) in the case of a completely inserted 90° bend (20);
- the inserted leg (21) of the bend (20) is limited by two concave curvatures (22a) and two convex curvatures (22b) corresponding to the limits of the branching off pipe section, a sealing strip (23) extending parallel to these curvatures being accommodated in a groove.

2. Outlet as claimed in claim 1, characterised in that the 90° bend (20) is extensible up to the stop position of an integrally formed hook (24) at a bead (24a).

3. Outlet as claimed in claim 1, characterised in that the socket (11) extending beyond the branching off pipe section (12) is dimensioned for receiving a waste water pipe with the same cross section as the continuating horizontal pipe section (10).

## Revendications

1. Dispositif d'écoulement pour toilettes suspendus au mur avec les caratéristiques suivantes:
- il est composé d'une section de tuyau (10) montable horizontalement avec une section de tuyau branchée (12) vers le haut à angle aigu, la section de tuyau horizontale (10) étant allongée au-delà de la section de tuyau branchée (12) en forme d'un manchon (11);
- un coude de 90° (20) est prévu qui est inséré dans la section de tuyau branchée (12) avec une branche (21) en manière d'être étanche et un peu extensible, l'autre branche (25) étant ajustable horizontalement vers l'un ou l'autre côté en direction transversal pour loger un coude d'écoulement des toilettes;
caractérisé par les autres caractéristiques suivantes:
- la section de tuyau branchée (12) est limitée à chaque côté par une courbure concave (13a), qui s'abouchent en forme de courbures convexes (13b), chaque fois, une des courbures concave loge la région inférieure de la branche horizontale (25) en cas d'un coude de 90° (20) complètement inséré;
- la branche (21) insérée du coude (20) est limitée par deux courbures concaves (22a) et deux courbures convexes (22b) conformément à la limitation de la section de tuyau branchée, une bande de garniture (23) parallèle à ces courbures étant logée dans une rainure.

2. Dispositif d'écoulement selon la revendication 1, caractérisé en ce que le coude de 90° (20) est extensible jusqu'à la butée d'un crochet (24) intégré à un talon (24a).

3. Dispositif d'écoulement selon la revendication 1, caractérisé en ce que le manchon (11) dépassant la section de tuyau (12) branchée est mesuré pour loger un tuyau des eaux d'égouts avec le même diamètre comme la section de tuyau (10) horizontale en continuation.
